# EUROPÄISCHE PATENTSCHRIFT

(11) **EP 2 750 875 B1**
(45) Veröffentlichungstag und Bekanntmachung des Hinweises auf die Patenterteilung: **22.02.2017**
(21) Anmeldenummer: 12762551.5
(22) Anmeldetag: 27.08.2012
(51) Int. Cl.: B32B 3/02, B32B 7/02, B32B 27/40, B60R 13/02, B62D 65/06

(54) **VERBUNDWERKSTOFF UND VERFAHREN ZU DESSEN HERSTELLUNG**
COMPOSITE MATERIAL AND METHOD FOR PRODUCING SAME
MATÉRIAU COMPOSITE ET SON PROCÉDÉ DE PRODUCTION

(30) Priorität: 02.09.2011 DE 102011082076
(43) Veröffentlichungstag der Anmeldung: 09.07.2014
(73) Patentinhaber: Covestro Deutschland AG, 51373 Leverkusen (DE)
(72) Erfinder: EHBING, Hubert, Shanghai 201206 (CN); ALBERS, Reinhard, 51375 Leverkusen (DE); ROTHE, Bernd, 50678 Köln (DE); WIRTZ, Hans-Guido, 51377 Leverkusen (DE)
(74) Vertreter: Levpat
(86) Internationale Anmeldenummer: PCT/EP2012/066601
(87) Internationale Veröffentlichungsnummer: WO 2013/030151

(56) Entgegenhaltungen:
- WO-A2-2009/043446

## Beschreibung

Die vorliegende Erfindung betrifft einen Verbundwerkstoff aus einer Schicht aus anorganischem, nicht metallischem Material und einem Sandwichelement sowie ein Verfahren zu dessen Herstellung.

Verbundwerkstoffe sind Werkstoffe aus zwei oder mehr miteinander verbundenen Materialien. Für die Eigenschaften des erhaltenen Werkstoffes sind stoffliche und unter Umständen auch geometrische Eigenschaften der einzelnen Komponenten von Bedeutung. Dies ermöglicht Eigenschaften unterschiedlicher Komponenten miteinander zu verbinden, wodurch die Verbundwerkstoffe breite Anwendungsmöglichkeiten finden. Die für das Endprodukt benötigten Eigenschaften können durch die Wahl unterschiedlicher Ausgangsstoffe für die Komponenten nach Bedarf eingestellt werden.

Verbundwerkstoffe können auf mehrere Arten hergestellt werden. Eine Möglichkeit ist die Sandwichbauweise. Diese Bauweise wird häufig für Halbzeuge, bei denen mehrere Schichten verschiedener Eigenschaften in einem Werkstoff eingebettet werden, verwendet. Als Konstruktionsweise bezeichnet die Sandwichbauweise eine Form des Leichtbaus, bei dem die Bauteile aus üblicherweise kraftaufnehmenden Decklagen bestehen, welche durch einen meist leichten Kernwerkstoff (Abstandhalter) auf Abstand gehalten werden. Entsprechende Teile sind bei geringem Gewicht sehr biegesteif.

Das Kernmaterial kann aus Waben oder porösen Werkstoffen aus unterschiedlichen Materialien, beispielsweise Papier, Pappe, Kunststoffen oder Metallen, Balsaholz, Wellblech oder Schaumstoffen bestehen. Es überträgt auftretende Schubkräfte und stützt die Deckschichten.

Anwendungen für in Sandwichbauweise hergestellte Verbundwerkstoffe sind beispielsweise Sportboote, Flugzeugteile (Rumpf, Flügelschalen), Exterior- und Interiorteile von Eisenbahnwaggons, Fahrzeug- und Automobilteile, Surfbretter und Rotorblätter für Windenergieanlagen, Fassaden- und Spiegelbauteile im Bauwesen und andere Anwendungsgebiete.

Sandwichpaneele mit Wabenkern aus Aramidfasern und mit Decklagen aus Glasfaserprepregs werden auch als Wände für Bordküchen und Toiletten in modernen Flugzeugen verwendet.

Im Bauwesen werden vorgefertigte Sandwichplatten aus einer Stahlbetontragschale, einer Wärmedämmung und einer Vorsatzschale aus Klinker oder Beton verwendet. Außerdem werden Verbundplatten mit metallischen Deckschichten und einer zwischenliegenden Wärmedämmung als Sandwichelement oder Sandwichpaneel bezeichnet.

Im Schiffbau ist diese Bauweise bereits heute, vor allem bei Sportbooten sehr verbreitet. Im Großschiffbau verspricht die Sandwichbauweise mehr Sicherheit, ganz besonders bei Tankschiffen.

Auch im Automobilbau wird die Sandwichbauweise eingesetzt. Bei geringem Gewicht kann so weiterhin eine hohe Stabilität erreicht werden. Die Herstellung eines faserverstärkten Kunststoff-Sandwichbauteiles ist beispielsweise aus DE 10 057 365 A1 bekannt.

Aus WO 2006/099939 A1 und WO 2009/043446 A2 sind Dachmodule für Kraftfahrzeuge bekannt, welche auf einer Sandwichbauweise basieren. Ein Sandwich besteht aus einem Abstandhalter, welcher auf beiden Seiten eine Decklage aufweist. Die Verbindung von Abstandhalter und Decklage erfolgt durch ein Polyurethan. Als Abstandhalter werden in diesen Sandwichelementen häufig Wabenstrukturen oder Wellbleche verwendet. Das Sandwich weist üblicherweise auf beiden Seiten eine Außenschicht/Funktionsschicht auf. Diese Außenschicht besteht häufig aus Kunststofffolien. Die Verbindung dieser Folien mit dem Sandwich erfolgt üblicherweise unter hoher Temperatur sowie Aufwendung von Druck. Dabei drückt sich häufig die Struktur des Abstandhalters durch die Folie durch, so dass die Oberfläche des Sandwichelements nicht mehr glatt ist. Die Struktur des Abstandhalters zeigt sich dann auch im Endprodukt.

Bei der Verwendung eines solchen Sandwichelements als Baustoff, welcher später auch sichtbar ist, ist eine solche unregelmäßige Oberfläche häufig unerwünscht.

Die durch Wabenstrukturen hervorgerufenen unregelmäßigen Oberflächen können durch die Verwendung eines Kunststoffschaums als Abstandshalter verhindert werden. Der verwendete Kunststoffschaum muss zur optimalen Verarbeitung luftdurchlässig sein, damit eingeschlossene Luft beim Herstellungsprozess in die Schaumschicht entweichen kann. Eine entsprechende Verwendung offenzelliger Schaumkerne ist bereits aus DE-A-10000767 bekannt.

Problematisch hierbei ist die Verwendung eines entsprechend leichten Schaumkernes unter Beibehaltung der erforderlichen Druckfestigkeit sowie eine Vermeidung von Delaminationseffekten zwischen Kernlage und Decklage sowie zwischen Decklage und Funktionsschicht.

Aus WO2006/099939 A1 und WO2009/043446 A2 ist für die Verbindung der unterschiedlichen Lagen ein Polyurethansystem bekannt, welches für die Anwendung in großen Bauteilen nicht geeignet ist,da es eine zu kurze Startzeit hat. Für die Herstellung von großen Bauteilen ist eine besonders angepasste Chemie des Polyurethansystems notwendig, da sonst schon beim Besprühen der Deckschichten die Reaktion des Polyurethans startet und im Bauteil hierdurch nicht gewünschte Eigenspannungen entstehen. Eine angepasste Startzeit - hierunter versteht man die Zeitspanne vom Einbringen des Reaktionsgemisches bis zum Starten der chemischen Reaktion - ist daher erforderlich. Bei wasserenthaltenen Polyurethanreaktionsgemischen wird ein visuell erkennbares Aufschäumen als Starten der Reaktion gewertet.

Zur Sicherstellung der Wirtschaftlichkeit des Verfahrens ist es jedoch erforderlich, eine kurze Entformungszeit des Bauteiles zu ermöglichen. Die Entformungszeit ist per Definition die Zeit, welche das Reaktionsgemisch aus Polyisocyanat und Polyadditionsprodukten benötigt, um in der Reaktionsform einen ausreichend hohen Vernetzungsgrad zu erzielen, welcher eine sachgerechte Entnahme des Verbundwerkstoffes aus der Werkzeugform ermöglicht.

Zur Herstellung großer Strukturbauteile muss das Polyurethansystem mit einer verzögerten Startzeit eingestellt werden. So kann sichergestellt werden, dass die gesamte Faserstruktur besprüht werden kann, ohne dass ein vorzeitiges Aufschäumen und zu schnelles Durchreagieren eine gleichmäßige Benetzung der Faserstruktur verhindert. Die Kombination aus verzögerter Startzeit und kurzer Entformungszeit erfordert eine speziell auf das Verfahren abgestimmte Chemie des Polyurethansystems.

Aufgabe der vorliegenden Erfindung ist daher die Bereitstellung eines Verbundwerkstoffes, welcher in Sandwichbauweise erhalten werden kann und die Nachteile des Standes der Technik vermeidet. Insbesondere soll ein entsprechender Verbundwerkstoff auch großflächig eine glatte Oberfläche aufweisen, bei welcher die Struktur des Abstandhalters nicht sichtbar ist. Die Oberfläche sollte sehr glatt sein und keine Dellen, Lufteinschlüsse oder ähnliche Defekte aufweisen. Die Oberfläche des Sandwichelementes sollte so eben sein, dass auch Funktionselemente, darauf befestigt werden können, ohne dass diese bereits durch das Sandwichelement, beziehungsweise den sich durchdrückenden Abstandhalter beschädigt werden. Eine weitere Aufgabe besteht darin, großflächige Bauteile bereit zu stellen, die ein niedriges Gewicht aufweisen, so dass der technische Aufwand sowohl bei der Fertigung als auch bei der Installation möglichst gering ist und mit denen eine hohe Gestaltungsfreiheit (z.B. Biegung, Anbringung von Befestigungen) möglich ist.

Überraschenderweise wurde gefunden, dass die Aufgabe durch eine Kombination einer stabilen Leichtbauunterkonstruktion (Sandwich-Element) mit einer Schicht aus anorganischem, nicht metallischem Material, insbesondere einer keramischen/glasartigen Schicht gelöst werden konnte. Gegenstand der Erfindung ist ein Verbundwerkstoff aus A) einer Schicht aus anorganischem, nicht metallischem Material und B) einem Sandwichelement, wobei das Sandwichelement
a) wenigstens einen Abstandhalter aus einem Kunststoffschaum,
b) wenigstens eine auf der Seite des Abstandhalters, die der Schicht (A) zugewandt ist, befindliche Schicht aus vollständig ausgehärtetem Polyurethan und einem für Polyurethan durchlässigen Substrat aus der Gruppe bestehend aus Geweben, Gewirken, Vliesen, Gelegen und Matten aus Kunststoff, Glas und/oder Carbon und
c) wenigstens eine auf der Seite des Abstandshalters, die der Schicht (A) abgewandt ist, befindliche Schicht aus vollständig ausgehärtetem, mit Glasfasermatten verstärktem Polyurethan mit einem Glasfasergehalt von mindestens 20 Gew.-%, bevorzugt mindestens 30 Gew.-%, bezogen auf die der Schicht (A) abgewandten Schicht, aufweist.

Vorzugsweise kann der Verbundwerkstoff eine zusätzliche elastische Schicht C) zwischen A) und B) aufweisen.

Der Kunststoffschaum weist bevorzugt eine Rohdichte von 10 bis 150 kg/m³ auf.

Das Polyurethan der Seite (b) und/oder (c) ist vorzugsweise aus einem Polyurethanreaktivgemisch erhältlich, welches ein oder mehrere Aminosilane als internen Haftvermittler und/oder ein oder mehrere interne Trennmittel enthält.

Das Polyurethan der Seite (b) und/oder (c) ist besonders bevorzugt aus einem Polyurethanreaktivgemisch in Gegenwart von einem oder mehreren latenten Katalysatoren erhältlich ist.

Ein weiterer Gegenstand der Erfindung ist ein Verfahren zur Herstellung des erfindungsgemäßen Verbundwerkstoffs, welches dadurch gekennzeichnet ist, dass
i) eine Schicht (A) aus anorganischem, nicht metallischem Material in eine offene Form eingelegt wird,
ii) auf die Schicht (A) aus i) ein noch nicht vollständig ausgehärtetes Sandwichelement (B) aufgelegt wird, wobei das Sandwichelement
   a) wenigstens einen Abstandhalter aus einem Kunststoffschaum,
   b) wenigstens eine auf der Seite des Abstandhalters, die der Schicht (A) zugewandt ist, befindliche Schicht aus nicht vollständig ausgehärtetem Polyurethan und einem für Polyurethan durchlässigen Substrat aus der Gruppe bestehend aus Geweben, Gewirken, Vliesen, Gelegen und Matten aus Kunststoff, Glas und/- oder Carbon und
   c) wenigstens eine auf der Seite des Abstandshalters, die der Schicht (A) abgewandt ist, befindliche Schicht aus nicht vollständig ausgehärtetem, mit Glasfasermatten verstärktem Polyurethan mit einem Glasfasergehalt von mindestens 20 Gew.-%, bevorzugt mindestens 30 Gew.-%, bezogen auf die der Schicht (A) abgewandten Schicht, aufweist,
iii) die Form geschlossen wird,
iv) das Polyurethan gegebenenfalls unter Temperatureinfluss ausgehärtet wird und der Schichtaufbau gegebenenfalls unter Temperatureinfluss und/oder unter Anlegen eines Vakuums verpresst wird,
v) die Form geöffnet und der geformte, ausgehärtete und gegebenenfalls verpresste Verbundwerkstoff aus der Form entnommen wird.

Die Reihenfolge der Schritte (i) und (ii) kann auch umgekehrt erfolgen.

Das Verfahren kann vorzugsweise so durchgeführt werden, dass vor dem Schritt ii) eine elastische Schicht auf die Schicht (A) aufgebracht wird (beispielsweise durch Sprühen).

Das Sandwichelement (B) kann als vorgefertigtes Element in die Form eingelegt werden. Bei der Fertigung des Sandwichelements außerhalb der Form werden die entsprechende Glasfasermatte auf der einen Seite des Kerns (Abstandhalters) und das entsprechende durchlässige Substrat auf der anderen Seite des Kerns mit Polyurethanreaktivgemisch besprüht und anschließend auf die Schicht (A) in der Form aufgelegt.

Die erfindungsgemäßen Verbundwerkstoffe können als Dachmodul, Karosserieteil, Strukturteil im Fahrzeug-, Schiff- oder Flugzeugbau, als Verkleidungselement oder Dekorelement oder als Fassaden- und Spiegelbauteil im Bauwesen oder anderen Anwendungen eingesetzt werden.

Beispielsweise eignen sich als Abstandhalter (Kern) offenzellige Hartschaumkerne auf der Basis von Polyurethan. Weiterhin eignen sich auch beispielsweise offenporige oder offenzellige (z.B. retikulierte) Polyvinylchlorid(PVC)-, Polyethylen(PE)-, Polypropylen(PP)-, Polyethylenterephthalat(PET)-, Polybutylenterephthalat(PBT)-, Polystyrol(PS)-, expandierte Polystyrol(EPS)- oder vernetzte Polystyrol(XPS)-Schäume oder auch offenzellige Metall- oder Keramikschäume.

Bevorzugt hat ein solcher offenporiger/offenzelliger Hartschaum eine Rohdichte von 10 bis 150 kg/m³, bevorzugt von 20 bis 100 kg/m³, besonders bevorzugt von 30 bis 60 kg/m³ (gemessen nach DIN EN ISO 845). Diese Hartschäume besitzen besonders bevorzugt eine Offenzelligkeit von > 10%, bevorzugt ≥ 12%, besonders bevorzugt ≥ 15% (gemessen nach DIN EN ISO 4590-86). Erfahrungsgemäß sind (PUR-) Hartschäume mit Rohdichten > 150 kg/m³ geschlossenzellig. Durch einen zusätzlichen Arbeitsschritt (zum Beispiel Retikulieren = das gezielte Öffnen des Schaums durch Unter- oder Überdruck in einem Autoklaven) können auch offenzellige Schaumstoffe mit höheren Rohdichten und Steifigkeiten beziehungsweise Festigkeiten erhalten werden. Diese können bevorzugt eingesetzt werden. Weiterhin kann ein geschlossenzelliger Schaum durch mechanische Nachbearbeitung (z.B. durch Perforieren der Oberfläche) eine offene Struktur erhalten.

Der Vorteil des erfindungsgemäßen Verbundwerkstoffes gegenüber im Stand der Technik beschriebenen Verbundwerkstoffen besteht darin, dass bei dessen Verwendung beispielsweise als Rückseitenabdeckung als Dachmodul, Fassadenelement oder anderen Bauteilen eventuell im Herstellungsprozess eingeschlossene Luft über den offenzelligen Kunststoffschaum austreten beziehungsweise durch diesen aufgenommen werden kann.

Aus den bekannten Verfahren zur Herstellung von Verbundelementen ist bekannt, dass üblicherweise das Sandwichelement vorgelegt wird und hierauf über eventuelle Klebeschichten eine Dekor- und/oder Funktionsschicht aufgebracht wird. Beim Aufbringen dieser Dekor- und/oder Funktionsschicht befindet sich Luft zwischen dieser und dem darunter liegenden Sandwichelement. Beim Verbinden wird nun gegebenenfalls unter erhöhter Temperatur ein Druck angelegt, gegebenenfalls kann auch ein Vakuum angelegt werden. Bei kleinflächigen Verbundwerkstoffen kann die Luft nun über die Ränder entweichen. Bei großflächigen Werkstoffen ist dies jedoch nicht möglich. Die Luft bleibt daher zwischen dem Sandwichelement und der Funktions- und/oder Dekorschicht eingeschlossen. Dies passiert bei dem erfindungsgemäßen Verfahren nicht.

In einem erfindungsgemäßen Sandwichelement ist der Abstandhalter so gestaltet, dass durch die offenen Zellen des Hartschaums die Luft aufgenommen oder entweichen kann. Hierdurch werden Lufteinschlüsse zwischen Sandwichelement und Schicht A) vermieden.

Die Deckschichten des Abstandhalters werden mit einem Polyurethanharz besprüht, welches eine homogene Verklebung des Verbundwerkstoffes ermöglicht. Bedingt durch den Pressvorgang bei der Fertigung wird außerdem ein Teil des Polyurethanharzes in den offenzelligen Randbereich der Kernlage hineingepresst. Hierdurch wird eine spätere Delamination der Decklage von der Kernlage zusätzlich unterbunden. Gleichzeitig wird zudem die Druckfestigkeit der Kernlage und somit die Biegesteifigkeit des Sandwiches erhöht.

Durch den Umstand, dass Teile des Polyurethanharzes in die Kernlage verpresst werden können, ergibt sich zudem eine sehr gleichmäßige Verteilung der Polyurethanmatrix zwischen Schicht A) und Sandwich - mögliche Verteilungsunterschiede beim Sprühauftrag werden hierdurch ausgeglichen.

Das eingesetzte Polyurethanharz ist erhältlich durch Umsetzung von
a) mindestens einem Polyisocyanat,
b) mindestens einer Polyolkomponente mit einer durchschnittlichen OH-Zahl von 300 bis 700, die mindestens ein kurzkettiges und ein langkettiges Polyol enthält, wobei die Ausgangspolyole eine Funktionalität von 2 bis 6 aufweisen,
c) Wasser,
d) Aktivatoren,
e) Stabilisatoren,
f) gegebenenfalls Hilfs-, Trenn- und/oder Zusatzmitteln
g) gegebenenfalls organischen und anorganischen Säuren.

Als langkettige Polyole eignen sich vorzugsweise Polyole mit mindestens zwei bis höchstens sechs gegenüber Isocyanatgruppen reaktiven H-Atomen; vorzugsweise werden Polyesterpolyole und Polyetherpolyole eingesetzt, die OH-Zahlen von 5 bis 100, bevorzugt 20 bis 70, besonders bevorzugt von 28 bis 56 aufweisen.

Als kurzkettige Polyole eignen sich bevorzugt solche, die OH-Zahlen von 150 bis 2000, bevorzugt 250 bis 1500, besonders bevorzugt von 300 bis 1100 aufweisen.

Bevorzugt werden erfindungsgemäß höherkernige Isocyanate der Diphenylmethandiisocyanat-Reihe (pMDI-Typen), deren Prepolymere oder Abmischungen aus diesen Komponenten eingesetzt.

Wasser wird in Mengen von 0 bis 3,0, bevorzugt 0 bis 2,0 Gew.-Teile auf 100 Gew.-Teile Polyolformulierung (Komponenten b) bis g)) eingesetzt.

Zur Katalyse werden die an sich üblichen Aktivatoren für die Treib- und Vernetzungsreaktion, wie z.B. Amine oder Metallsalze verwendet. In Frage kommen beispielsweise tertiäre Amine und/oder organische Metallverbindungen. Beispielsweise können als Katalysatoren folgende, dem Fachmann geläufige Verbindungen eingesetzt werden: Triethylendiamin, Aminoalkyl- und/oder Aminophenylimidazole und/oder organische Carbonsäuresalze. Erfindungsgemäß können als Metallkatalysatoren auch Metallverbindungen des Zinns, Titans und/oder Bismuts verwendet werden. Die Katalysatoren werden üblicherweise in Mengen von 0,2 - 4 Gew.-% bezogen auf das Gewicht der Komponente b) eingesetzt.

Als Schaumstabilisatoren kommen vorzugsweise Polyethersiloxane, bevorzugt wasserlösliche Komponenten, in Frage. Die Stabilisatoren werden üblicherweise in Mengen von 0,01 bis 5 Gew.-Teilen, bezogen auf 100 Gew.-Teile der Polyolformulierung (Komponenten b) bis g)) angewandt.

Der Reaktionsmischung zur Herstellung des Polyurethanharzes können gegebenenfalls Hilfs-, Trenn- und Zusatzmittel zugesetzt werden, beispielsweise oberflächenaktive Zusatzstoffe, wie z.B. Emulgatoren, Flammschutzmittel, Keimbildungsmittel, Oxidationsverzögerer, Gleit- und Entformungsmittel, Farbstoffe, Dispergiermittel, Treibmittel und Pigmente.

Das Reaktionsgemisch kann gegebenenfalls bekannte organische oder anorganische Säuren enthalten (Komponente g)), insbesondere anorganische oder organische Säuren, welche geeignet sind, basische Katalysatoren, insbesondere tertiäre Amine, zu blockieren. Beispielsweise geeignet sind Phosphorsäure, Essigsäure und/oder wässrige Polyacrylsäure. Die Komponenten werden vorzugsweise in einem Anteil von 0,05 Gew.-% bis 0,8 Gew.-%, bevorzugt 0,05 Gew.-% bis 0,1 Gew.-%, bezogen auf das Gesamtgewicht der Polyolformulierung (Komponente b) bis g)) angewandt.

Die Komponenten werden in solchen Mengen zur Umsetzung gebracht, dass das Äquivalenzverhältnis der NCO-Gruppen der Polyisocyanate a) zur Summe der gegenüber Isocyanatgruppen reaktiven Wasserstoffe der Komponenten b) und c) sowie gegebenenfalls d), e) und f) 0,8:1 bis 1,4:1, vorzugsweise 0,9:1 bis 1,3:1 beträgt.

Das für Polyurethan durchlässige Substrat kann beispielsweise aus Glasfasermatten, Glasfaservliesen, Glasfaserwirrlagen, Glasfasergeweben, geschnittenen oder gemahlenen Glas- oder Mineral-Fasern, Naturfasermatten und -gewirken, geschnittenen Naturfasern, sowie Fasermatten, - vliesen und -gewirken auf Basis von Polymer-, Kohlenstoff- bzw. Aramidfasern sowie deren Mischung bestehen.

Die Faserschicht verleiht dem Abstandhalter aus Kunststoffschaum die Steifigkeit, welche im endgültigen Produkt dann benötigt wird. Die Faserschicht ist außerdem luftdurchlässig.

Die elastische Schicht C) zwischen Schicht A) und Sandwichelement B), ihre Zusammensetzung und Herstellung werden ausführlich in DE-A 102005012 796 beschrieben.

Als Schicht (A) können anorganische, nicht metallische Werkstoffe verwendet werden. Glas, Marmor oder andere anorganische, nicht metallische Werkstoffe können als Schicht eingesetzt werden. Hierbei kann eine Platte oder Folie als Schicht A) verwendet werden. Die Schichten A) sind kommerziell erhältlich, und ihre Herstellung ist allgemein bekannt. Im Allgemeinen weist die Schicht A) eine Dicke von 0,2 bis 4 mm, bevorzugt von 0,5 bis 1,5 mm, besonders bevorzugt von 0,75 bis 1,1 mm auf.

Auf die äußere Seite der Schicht A) kann bevorzugt noch eine transparente Schutzschicht aufgebracht werden, beispielsweise in Form eines Lackes oder einer Plasmaschicht. Diese zusätzliche Schutzschicht übernimmt den Schutz gegenüber äußeren Einflüssen.

Auf der inneren Seite (Unterseite) der Schicht A), welche zum Sandwichelement gerichtet ist, kann ein angepasster Haftvermittler aufgetragen werden. Durch eine derartige Maßnahme kann die Schicht A) eine zusätzliche, verbesserte Haftung zur Deckschicht des Sandwichelementes bzw. zur elastischen Schicht C), soweit vorhanden, und/oder eine wärme- und/oder feuchtigkeitshemmende Funktion erhalten.

Auf die Rückseite des Sandwichelementes, die der Schicht A) abgewandt ist, kann eine Schutzschicht aufgebracht werden. Diese zusätzliche Schutzschicht übernimmt den Schutz gegenüber äußeren Einflüssen.

Der erfindungsgemäße Verbundwerkstoff kann vorzugsweise einen Rahmen aufweisen. Ein solcher Rahmen schützt den Abstandhalter vor Feuchtigkeit, Luft oder anderen Umwelteinflüssen, welche durch die Seiten, die nicht mit den Polyurethanschichten bedeckt sind, eindringen können. Durch Eindringen von Feuchtigkeit kann die Qualität des gesamten Sandwichelements stark beeinträchtigt werden. Eine homogene Oberfläche und damit verbunden ein guter optischer Eindruck beziehungsweise eine gute Haftung der Schicht (A) ist dann nicht mehr gewährleistet. Durch einen entsprechenden Rahmen werden solche Einflüsse verhindert.

Das erfindungsgemäße Verfahren kann so durchgeführt werden, dass
i) das Sandwichelement in eine offene Form vorgelegt wird,
ii) gegebenenfalls eine zusätzliche elastische Schicht in Form einer Kunststofffolie oder als Masse auf eine freiliegende Fläche des Sandwichelementes aufgebracht wird,
iii) die Schicht (A), auf der gegebenenfalls ein Haftvermittler aufgetragen ist, aufgebracht wird,
iv) die Form geschlossen wird,
v) das Polyurethan gegebenenfalls unter Temperatureinfluss ausgehärtet wird und dieser Schichtaufbau gegebenenfalls unter Temperatureinfluss und/oder unter Anlegen eines Vakuums verpresst wird und
vi) die Form geöffnet und der geformte, ausgehärtete Verbundwerkstoff aus der Form entnommen wird.

Alternativ kann man auch die Reihenfolge des Vorlegens der einzelnen Schichten ändern.

Das erfindungsgemäße Verfahren zur Herstellung eines Verbundwerkstoffes kann auch so durchgeführt werden, dass
i) die Schicht (A), auf der gegebenenfalls ein Haftvermittler aufgetragen ist, in ein offenes Werkzeug vorgelegt wird,
ii) gegebenenfalls eine elastische Schicht (C) in Form einer Kunststofffolie oder als Masse auf die Schicht (A) aufgebracht wird,
iii) ein Sandwichelement aufgebracht wird,
iv) die Form geschlossen wird,
v) das Polyurethan gegebenenfalls unter Temperatureinfluss ausgehärtet wird und dieser Schichtaufbau gegebenenfalls unter Temperatureinfluss und/oder unter Anlegen eines Vakuums verpresst wird und
vi) die Form geöffnet und der geformte, ausgehärtete Verbundwerkstoff aus der Form entnommen wird.

Im Rahmen des Fertigungsverfahrens können unterschiedliche Befestigungselemente in den Sandwichaufbau integriert werden. Diese Elemente können auf der Rückseite des Sandwichelementes zusätzlich angebracht werden, so dass durch das Besprühen mit Polyurethanreaktivgemisch eine feste Verbindung entsteht. Ebenfalls können die Befestigungselemente mittels zusätzlichem Glasfasereinsatz und zusätzlichem Polyurethan mit dem Sandwich verbunden werden.

Die erfindungsgemäßen Verbundwerkstoffe können als Dachmodul, Karosserieteil, Strukturteil im Fahrzeug- Schiff- oder Flugzeugbau, als Verkleidungselement oder Dekorelement oder als Fassaden- und Spiegelbauteil im Bauwesen oder anderen Anwendungen eingesetzt werden.

Die Erfindung soll anhand der nachfolgenden Beispiele näher erläutert werden.

### Beispiele

### Ausführungsbeispiel (1):

Als Sandwichelement wurde ein sogenanntes Baypreg®-Sandwich (von Bayer MaterialScience AG) verwendet. Dieses Sandwich besteht aus zwei unterschiedlichen Deckschichten und einem Kunststoffschaumkern, die mittels eines aufgesprühten Polyurethans (Baypreg®) miteinander verbunden sind.

Zur Herstellung des Sandwichelementes wurde auf eine Polystyrolplatte ( von Philippine GmbH & Co. Dämmstoffsysteme KG, Bochum, Typ PH-WDV 60/040, Dicke 20 mm) auf deren Oberseite (diese ist zur Schicht A) ausgerichtet) eine Wirrglasfasermatte mit einem Flächengewicht von 225 g/m² (Typ M-113 Firma Saint-Gobain Vetrotex Deutschland GmbH, Aachen) und auf deren Unterseite (zur Schicht A) abgewandte Seite) eine Wirrglasfasermatte mit einem Flächengewicht von 450 g/m² (Typ M 5, Firma Saint-Gobain Vetrotex Deutschland GmbH, Aachen) gelegt.

Auf diesen Aufbau wurden anschließend beidseitig 450 g/m² eines reaktiven Polyurethan-Systems mit einer Hochdruck-Verarbeitungsmaschine gesprüht. Es wurde ein Polyurethan-System der Bayer MaterialScience AG, Leverkusen bestehend aus einem Polyol (Baypreg® VP.PU PR-02831-01) und einem Isocyanat (Desmodur® VP.PU 081F03) im Mischungsverhältnis 100 Gew.-Teile zu 204 Gew.-Teile verwendet.

Das Sandwichelement aus der Polystyrolplatte als Abstandhalter und den mit Polyurethan besprühten Deckschichten wurde in ein Presswerkzeug überführt, in dem sich auf der Unterseite die bereits zuvor eingelegte anorganische, nicht metallische Schicht A) befand. Die anorganische, nicht metallische Schicht ist eine Glasscheibe mit einer Dicke von 0,95 mm.

Das Werkzeug war auf 90 °C temperiert, und der Aufbau wurde in 300 Sekunden zu einem 18 mm dicken Verbundelement verpresst.

### Ausführungsbeispiel (2):

Als Sandwichelement wurde ein Baypreg®-Sandwich von Bayer MaterialScience AG verwendet. Dieses Sandwich besteht aus zwei unterschiedlichen Deckschichten und einem Kunststoffschaumkern, die mittels eines aufgesprühten Polyurethans (Baypreg®) miteinander verbunden sind. Zusätzlich wurde auf die der Schicht A) zugewandten Seite eine elastische Schicht aus Polyurethan mit einer Dicke von einem Millimeter aufgesprüht.

In das geöffnete Werkzeug wurde als erstes die anorganische, nicht metallische Schicht A) (Glas mit einer Dicke von 0,95mm) eingelegt.

Danach wurde zur Herstellung der elastischen Schicht C) in einer Dicke von einem Millimeter auf die Schicht A) ein Polyurethaneaktivgemisch aufgesprüht. Das Gemisch besteht aus einem Polyol (Bayflex^{®} VP.PU 51BD14) und einem Isocyanat (Desmodur^{®} VP.PU 18IF19) von Bayer MaterialScience AG, Leverkusen.

Zur Sandwichherstellung wurde zunächst auf die Ober- und Unterseite einer Polystyrolplatte (von Philippine GmbH & Co. Dämmstoffsysteme KG, Bochum, Typ PH-WDV 60/040, Dicke 10 mm) jeweils eine Wirrfasermatte vom Typ M 113 mit einem Flächengewicht von 225 g/m² (von Saint-Gobain Vetrotex Deutschland GmbH, Aachen) gelegt.

Auf diesen Aufbau wurden anschließend beidseitig 450 g/m² eines reaktiven Polyurethan-Systems mit einer Hochdruck-Verarbeitungsmaschine gesprüht. Es wurde ein Polyurethan-System der Bayer MaterialScience AG, Leverkusen bestehend aus einem Polyol (Baypreg® VP.PU PR-02831-01) und einem Isocyanat (Desmodur® VP.PU 081F03) im Mischungsverhältnis 100 Gew.-Teile zu 204 Gew.-Teile verwendet.

Das Sandwichelement aus der Polystyrolplatte als Abstandhalter und den mit Polyurethan besprühten Deckschichten wurde in ein Presswerkzeug überführt, in dem sich auf der Unterseite die bereits zuvor eingelegte Schicht A) samt elastischer Schicht C) befand. Das Werkzeug war auf 90 °C temperiert, und der Aufbau wurde in 300 Sekunden zu einem 11 mm dicken Verbundelement verpresst.

Die hergestellten Bauteile weisen nach der Herstellung keinen Verzug und keine Delamination zwischen Schicht A) und Sandwichelement auf. Nach einem Klima-Wechseltest tritt ebenfalls keine Delamination auf, und die Schicht A) bleibt über die gesamte Oberfläche unbeschadet erhalten. Es treten keine Störungen an der Oberfläche auf.

## Patentansprüche

1. Verbundwerkstoff aus A) einer Schicht aus anorganischem, nicht metallischem Material und B) einem Sandwichelement, wobei das Sandwichelement
a) wenigstens einen Abstandhalter aus einem Kunststoffschaum,
b) wenigstens eine auf der Seite des Abstandhalters, die der Schicht (A) zugewandt ist, befindliche Schicht aus vollständig ausgehärtetem Polyurethan und einem für Polyurethan durchlässigen Substrat aus der Gruppe bestehend aus Geweben, Gewirken, Vliesen, Gelegen und Matten aus Kunststoff, Glas und/oder Carbon und
a) wenigstens eine auf der Seite des Abstandshalters, die der Schicht (A) abgewandt ist, befindliche Schicht aus vollständig ausgehärtetem, mit Glasfasermatten verstärktem Polyurethan mit einem Glasfasergehalt von mindestens 20 Gew.-%, bezogen auf die der Schicht (A) abgewandten Schicht, aufweist.

2. Verbundwerkstoff gemäß Anspruch 1, **dadurch gekennzeichnet, dass** der Verbundwerkstoff eine zusätzliche elastische Schicht C) zwischen A) und B) aufweist.

3. Verbundwerkstoff gemäß Anspruch 1 oder 2, **dadurch gekennzeichnet, dass** der Verbundwerkstoff eine zusätzliche Haftvermittlerschicht D) zwischen A) und B) oder zwischen A) und C), falls vorhanden, aufweist.

4. Verbundwerkstoff gemäß Anspruch 1, **dadurch gekennzeichnet, dass** der Kunststoffschaum eine Rohdichte von 10 bis 150 kg/m³ aufweist.

5. Verbundwerkstoff gemäß Anspruch 1, **dadurch gekennzeichnet, dass** das Polyurethan der Seite (b) und/oder (c) aus einem Polyurethanreaktivgemisch erhältlich ist, welches ein oder mehrere Aminosilane als internen Haftvermittler enthält.

6. Verbundwerkstoff gemäß Anspruch 1, **dadurch gekennzeichnet, dass** das Polyurethan der Seite (b) und/oder (c) aus einem Polyurethanreaktivgemisch erhältlich ist, welches ein oder mehrere interne Trennmittel enthält.

7. Verbundwerkstoff gemäß Anspruch 1, **dadurch gekennzeichnet, dass** das Polyurethan der Seite (b) und/oder (c) aus einem Polyurethanreaktivgemisch in Gegenwart von einem oder mehreren latenten Katalysatoren erhältlich ist.

8. Verfahren zur Herstellung eines Verbundwerkstoffs gemäß Anspruch 1 bis 7, **dadurch gekennzeichnet, dass**
i) eine Schicht (A) aus anorganischem, nicht metallischem Material, auf der gegebenenfalls ein Haftvermittler aufgebracht ist, in eine offene Form eingelegt wird,
ii) auf die Schicht (A) aus i) ein noch nicht vollständig ausgehärtetes Sandwichelement (B) aufgelegt wird, wobei das Sandwichelement
a) wenigstens einen Abstandhalter aus einem Kunststoffschaum,
b) wenigstens eine auf der Seite des Abstandhalters, die der Schicht (A) zugewandt ist, befindliche Schicht aus nicht vollständig ausgehärtetem Polyurethan und einem für Polyurethan durchlässigen Substrat aus der Gruppe bestehend aus Geweben, Gewirken, Vliesen, Gelegen und Matten aus Kunststoff, Glas und/oder Carbon und
c) wenigstens eine auf der Seite des Abstandshalters, die der Schicht (A) abgewandt ist, befindliche Schicht aus nicht vollständig ausgehärtetem, mit Glasfasermatten verstärktem Polyurethan mit einem Glasfasergehalt von mindestens 30 Gew.-%, bezogen auf die der Schicht (A) abgewandten Schicht, aufweist,
iii) die Form geschlossen wird,
iv) das Polyurethan gegebenenfalls unter Temperatureinfluss ausgehärtet wird und der Schichtaufbau gegebenenfalls unter Temperatureinfluss und/oder unter Anlegen eines Vakuums verpresst wird,
v) die Form geöffnet und der geformte, ausgehärtete und verpresste Verbundwerkstoff aus der Form entnommen wird.

9. Verfahren gemäß Anspruch 8, **dadurch gekennzeichnet, dass** vor dem Schritt ii) eine elastische Schicht (C) auf die Schicht (A) aufgebracht wird.

10. Verfahren gemäß Anspruch 8, **dadurch gekennzeichnet, dass** vor dem Schritt ii) ein Haftvermittler auf die Schicht (A) aufgebracht wird.

11. Verfahren zur Herstellung eines Verbundwerkstoffs gemäß Anspruch 8, **dadurch gekennzeichnet, dass**
der Verfahrensschritt ii) als erster Verfahrensschritt (i*) und der Verfahrensschritt i) als zweiter Verfahrensschritt (ii*) durchgeführt wird.

12. Verfahren zur Herstellung eines Verbundwerkstoffs gemäß Anspruch 11, **dadurch gekennzeichnet, dass** nach dem Verfahrensschritt (i*) und vor dem Verfahrensschritt (ii*) eine zusätzliche elastische Schicht (C) in Form einer Kunststofffolie oder als Masse auf die freiliegende Fläche des Sandwichelementes aufgebracht wird.

13. Verwendung eines Verbundwerkstoffs gemäß Anspruch 1 bis 7 als Dachmodul, Karosserieteil, Strukturteil im Fahrzeug-, Schiff- oder Flugzeugbau, als Verkleidungselement oder Dekorelement oder als Fassaden- und Spiegelbauteil im Bauwesen.

## Claims

1. Composite material consisting of A) a layer of inorganic non-metallic material and B) a sandwich element, wherein the sandwich element includes
a) at least one spacer composed of a foamed plastic,
b) on that side of the spacer which faces said layer (A) at least one layer of completely cured polyurethane and a polyurethane-permeable substrate from the group consisting of wovens, knits, nonwovens, scrims and mats of plastic, glass and/or carbon, and
c) on that side of the spacer which faces away from said layer (A) at least one layer of completely cured polyurethane reinforced with glass fiber mats and having a glass fiber content of at least 20 wt%, based on the layer facing away from said layer (A).

2. Composite material according to Claim 1, **characterized in that** the composite material includes an additional elastic layer C) between A) and B).

3. Composite material according to Claim 1 or 2, **characterized in that** the composite material includes an additional adhesion-promoting layer D) between A) and B) or between A) and C), if present.

4. Composite material according to Claim 1, **characterized in that** the foamed plastic has an apparent density of 10 to 150 kg/m³.

5. Composite material according to Claim 1, **characterized in that** the polyurethane of side (b) and/or (c) is obtainable from a reactive polyurethane mixture which contains one or more aminosilanes as internal adhesion promoters.

6. Composite material according to Claim 1, **characterized in that** the polyurethane of side (b) and/or (c) is obtainable from a reactive polyurethane mixture which contains one or more internal release agents.

7. Composite material according to Claim 1, **characterized in that** the polyurethane of side (b) and/or (c) is obtainable from a reactive polyurethane mixture in the presence of one or more latent catalysts.

8. Method for producing a composite material according to Claim 1 or 2 or 3 or 4 or 5 or 6 or 7, **characterized in that**
i) a layer (A) of inorganic non-metallic material with or without an applied adhesion promoter is inserted into an open mold,
ii) an incompletely cured sandwich element (B) is placed on said layer (A) from i), wherein the sandwich element includes
a) at least one spacer composed of a foamed plastic,
b) on that side of the spacer which faces said layer (A) at least one layer of incompletely cured polyurethane and a polyurethane-permeable substrate from the group consisting of wovens, knits, nonwovens, scrims and mats of plastic, glass and/or carbon, and
c) on that side of the spacer which faces away from said layer (A) at least one layer of incompletely cured polyurethane reinforced with glass fiber mats and having a glass fiber content of at least 30 wt%, based on the layer facing away from said layer (A),
iii) the mold is closed,
iv) the polyurethane is cured with or without heating and the layered construction is pressed with or without heating and with or without application of a vacuum,
v) the mold is opened and the shaped, cured and pressed composite material is removed from the mold.

9. Method according to Claim 8, **characterized in that** an elastic layer (C) is applied to said layer (A) prior to step ii).

10. Method according to Claim 8, **characterized in that** an adhesion promoter is applied to said layer (A) prior to step ii).

11. Method for producing a composite material according to Claim 8, **characterized in that**
said step ii) is carried out as the first step (i*) and said step i) is carried out as the second step (ii*).

12. Method for producing a composite material according to Claim 11, **characterized in that** after said step (i*) and prior to said step (ii*) an additional elastic layer (C) in the form of a polymeric film/sheet or as a compound is applied to the free area of the sandwich element.

13. Use of a composite material according to Claim 1 or 2 or 3 or 4 or 5 or 6 or 7 as a roof module, as a chassis part, as a structural part in vehicle, ship or aircraft construction, as a cladding element or decorative element or as a building exterior and mirror component part in building construction.

## Revendications

1. Matériau composite constitué par A) une couche d'un matériau inorganique, non métallique et B) un élément sandwich, l'élément sandwich présentant
a) au moins un écarteur en une mousse synthétique,
b) au moins une couche, se trouvant sur le côté de l'écarteur qui est orienté vers la couche (A), constituée par un polyuréthane complètement durci et un substrat perméable au polyuréthane du groupe constitué par les tissus, des tricots, les non-tissés, les nattes et les mats en matériau synthétique, en verre et/ou en carbone et
c) au moins une couche, se trouvant sur le côté de l'écarteur qui est opposé à la couche (A), en polyuréthane complètement durci, renforcé par des mats de fibres de verre, présentant une teneur en fibres de verre d'au moins 20% en poids, par rapport à la couche opposée à la couche (A).

2. Matériau composite selon la revendication 1, **caractérisé en ce que** le matériau composite présente une couche C) élastique supplémentaire entre A) et B).

3. Matériau composite selon la revendication 1 ou 2, **caractérisé en ce que** le matériau composite présente une couche de promoteur d'adhérence D) supplémentaire entre A) et B) ou entre A) et C), si elle est présente.

4. Matériau composite selon la revendication 1, **caractérisé en ce que** la mousse synthétique présente une densité brute de 10 à 150 kg/m³.

5. Matériau composite selon la revendication 1, **caractérisé en ce que** le polyuréthane du côté (b) et/ou (c) peut être obtenu à partir d'un mélange réactif de polyuréthane qui contient un ou plusieurs aminosilanes comme promoteur d'adhérence interne.

6. Matériau composite selon la revendication 1, **caractérisé en ce que** le polyuréthane du côté (b) et/ou (c) peut être obtenu à partir d'un mélange réactif de polyuréthane qui contient un ou plusieurs agents de démoulage internes.

7. Matériau composite selon la revendication 1, **caractérisé en ce que** le polyuréthane du côté (b) et/ou (c) peut être obtenu à partir d'un mélange réactif de polyuréthane en présence d'un ou de plusieurs catalyseurs latents.

8. Procédé pour la préparation d'un matériau composite selon la revendication 1 à 7, **caractérisé en ce que**
i) une couche (A) constituée par un matériau inorganique, non métallique, sur laquelle est appliqué le cas échéant un promoteur d'adhérence, est introduite dans un moule ouvert,
ii) un élément sandwich (B) non encore complètement durci est appliqué sur la couche (A) de l'étape i), l'élément sandwich présentant
a) au moins un écarteur en une mousse synthétique,
b) au moins une couche, se trouvant sur le côté de l'écarteur qui est orienté vers la couche (A), constituée par un polyuréthane non complètement durci et un substrat perméable au polyuréthane du groupe constitué par les tissus, les tricots, les non-tissés, les nattes et les mats en matériau synthétique, en verre et/ou en carbone et
c) au moins une couche, se trouvant sur le côté de l'écarteur qui est opposé à la couche (A), en polyuréthane non complètement durci, renforcé par des mats de fibres de verre, présentant une teneur en fibres de verre d'au moins 30% en poids, par rapport à la couche opposée à la couche (A).
iii) le moule est fermé,
iv) le polyuréthane est durci, le cas échéant sous l'influence de la température, et la structure à couches est pressée, le cas échéant sous l'influence de la température et/ou avec application d'un vide,
v) le moule est ouvert et le matériau composite moulé, durci et pressé est prélevé du moule.

9. Procédé selon la revendication 8, **caractérisé en ce qu'**une couche élastique (C) est appliquée sur la couche (A) avant l'étape ii).

10. Procédé selon la revendication 8, **caractérisé en ce qu'**un promoteur d'adhérence est appliqué sur la couche (A) avant l'étape ii).

11. Procédé pour la fabrication d'un matériau composite selon la revendication 8, **caractérisé en ce que** l'étape de procédé ii) est réalisée comme première étape de procédé (i*) et l'étape de procédé i) est réalisée comme deuxième étape de procédé (ii*).

12. Procédé pour la fabrication d'un matériau composite selon la revendication 11, **caractérisé en ce qu'**une couche (C) élastique supplémentaire sous forme d'une feuille synthétique ou sous forme de masse est appliquée, après l'étape de procédé (i*) et avant de l'étape de procédé (ii*), sur la surface libre de l'élément sandwich.

13. Utilisation d'un matériau composite selon la revendication 1 à 7, comme module de toiture, pièce de carrosserie, pièce structurale dans la construction de voitures, de bateaux ou d'avions, comme élément de revêtement ou élément décoratif ou comme pièce de façade et de miroir dans le domaine de la construction.
